# EUROPEAN PATENT SPECIFICATION

(11) **EP 4 455 944 B1**
(45) Date of publication and mention of the grant of the patent: **02.12.2026**
(21) Application number: 22910469.0
(22) Date of filing: 06.09.2022
(51) Int. Cl.: G06N 3/0985, G06N 3/042, G06N 3/096, G06N 3/045, G06N 3/0464

(54) **MACHINE LEARNING DEVICE, MACHINE LEARNING METHOD, AND MACHINE LEARNING PROGRAM**
MASCHINENLERNVORRICHTUNG, MASCHINENLERNVERFAHREN UND MASCHINENLERNPROGRAMM
DISPOSITIF D'APPRENTISSAGE AUTOMATIQUE, PROCÉDÉ D'APPRENTISSAGE AUTOMATIQUE ET PROGRAMME D'APPRENTISSAGE AUTOMATIQUE

(30) Priority: 23.12.2021 JP 2021209555
(43) Date of publication of application: 30.10.2024
(73) Proprietor: JVCKENWOOD Corporation, Yokohama-shi, Kanagawa 221-0022 (JP)
(72) Inventor: KIDA Shingo, Yokohama-shi Kanagawa 221-0022 (JP)
(74) Representative: Wimmer, Hubert
(86) International application number: PCT/JP2022/033365
(87) International publication number: WO 2023/119742

(56) References cited:
- CN-A- 112 116 063
- S. W. YOON ET AL: "XtarNet: learning to extract task-adaptive representation for incremental few-shot learning", ARXIV.ORG, CORNELL UNIVERSITY LIBRARY, 201 OLIN LIBRARY CORNELL UNIVERSITY ITHACA, NY 14853, 1 July 2020 (2020-07-01), XP081714696, DOI: 10.48550/arXiv.2003.08561
- C. ZHANG ET AL: "Few-shot incremental learning with continually evolved classifiers", ARXIV.ORG, CORNELL UNIVERSITY LIBRARY, 201 OLIN LIBRARY CORNELL UNIVERSITY ITHACA, NY 14853, 7 April 2021 (2021-04-07), XP081933697, DOI: 10.48550/arXiv.2104.03047
- GIDARIS SPYROS; KOMODAKIS NIKOS: "Generating Classification Weights With GNN Denoising Autoencoders for Few-Shot Learning", 2019 IEEE/CVF CONFERENCE ON COMPUTER VISION AND PATTERN RECOGNITION (CVPR), IEEE, 15 June 2019 (2019-06-15), pages 21 - 30, XP033687028, DOI: 10.1109/CVPR.2019.00011

## Description

### TECHNICAL FIELD

The present invention relates to machine learning technologies.

### BACKGROUND ART

Human beings can learn new knowledge through experiences over a prolonged period of time and can maintain old knowledge without forgetting it. Meanwhile, the knowledge of a convolutional neutral network (CNN) depends on the dataset used in learning. To adapt to a change in data distribution, it is necessary to re-train CNN parameters in response to the entirety of the dataset. In CNN, the precision estimation for old tasks will be decreased as new tasks are learned. Thus, catastrophic forgetting cannot be avoided in CNN. Namely, the result of learning old tasks is forgotten as new tasks are being learned in successive learning.

Incremental learning or continual learning is proposed as a scheme to avoid catastrophic forgetting. Continual learning is a learning method that improves a current trained model to learn new tasks and new data as they occur, instead of training the model from scratch.

On the other hand, since new tasks often have only a few pieces of sample data available, few-shot learning has been proposed as a method for efficient learning with a small amount of training data. In few-shot learning, new tasks are learned using another small amount of parameters without relearning parameters that have been learned once.

A method called incremental few-shot learning (IFSL) has been proposed, which combines continual learning, where a novel class is learned without catastrophic forgetting of the result of learning the base class, and few-shot learning, where a novel class with fewer examples as compared to the base class is learned (Non-Patent Literature 1). In incremental few-shot learning, base classes can be learned from a large dataset and novel classes can be learned from a small number of sample data pieces.

As an incremental few-shot learning method, a method for learning the reconstruction of classification weights, also called "prototypes," using a graph neural network (GNN) has been proposed (Non-Patent Literature 2). Further, as an incremental few-shot learning method, a method for learning the reconstruction of classification weights using a graph attention network (GAT) has been proposed (Non-Patent Literature 3).

### RELATED-ART LITERATURE

### NON-PATENT LITERATURE

[Non-Patent Literature 1] Yoon, S. W., Kim, D. Y., Seo, J., & Moon, J. (2020, November). XtarNet: Learning to extract task-adaptive representation for incremental few-shot learning. In International Conference on Machine Learning (pp. 10852-10860). PMLR also published as arXiv:2003.08561v2 (doi:10.48550/arXiv.2003.08561).
[Non-Patent Literature 2] Gidaris, S., & Komodakis, N. (2019). Generating classification weights with GNN denoising autoencoders for few-shot learning. In Proceedings of the IEEE/CVF Conference on Computer Vision and Pattern Recognition (pp. 21-30)
[Non-Patent Literature 3] Zhang, C., Song, N., Lin, G., Zheng, Y., Pan, P., & Xu, Y. (2021). Few-shot incremental learning with continually evolved classifiers. In Proceedings of the IEEE/CVF Conference on Computer Vision and Pattern Recognition (pp. 12455-12464) also published as arXiv:2104.03047v1 (doi:10.48550/arXiv.2104.03047).

### SUMMARY OF INVENTION

In the methods described in Non-Patent Literatures 2 and 3, since learning of the reconstruction of class classification weights is performed while a feature extractor is fixed, the features of each image sample themselves do not change, and only the class classification weights are adjusted. Therefore, there is a problem that the features of an image sample and the corresponding class classification weights are separated and that the class classification accuracy may thus be reduced.

The present invention addresses the issue described above, and a general purpose thereof is to provide a machine learning technology capable of improving class classification accuracy by gathering corresponding image sample features near class classification weights obtained after reconstruction.

In order to solve the aforementioned problems, a machine learning device, a computer implemented machine learning method and a machine learning program as set forth in the appended claims are provided.

Optional combinations of the aforementioned constituting elements and implementations of the present embodiments in the form of methods, apparatuses, systems, recording mediums, and computer programs may also be practiced as additional modes of the present embodiments.

According to the present embodiment, a machine learning technology can be provided that is capable of improving class classification accuracy by gathering corresponding image sample features near class classification weights obtained after reconstruction.

### BRIEF DESCRIPTION OF DRAWINGS

[Fig. 1A] Fig. 1A is a diagram explaining the configuration of a pre-training module.
[Fig. 1B] Fig. 1B is a diagram explaining the configuration of an incremental few-shot learning module.
[Fig. 1C] Fig. 1C is a diagram explaining episodic training.
[Fig. 2A] Fig. 2A is a diagram explaining a configuration for generating task-specific merged weight vectors for calculating a task-adaptive representation from a support set.
[Fig. 2B] Fig. 2B is a diagram explaining a configuration for calculating a task-adaptive representation from a support set so as to generate a classification weight vector set W based on the task-adaptive representation.
[Fig. 3] Fig. 3 is a diagram explaining a configuration for calculating a task-adaptive representation from a query set and classifying a query sample into classes based on the task-adaptive representation and a task-adjusted classification weight vector set so as to minimize class classification loss.
[Fig. 4] Fig. 4 is a configuration diagram of a conventional machine learning device.
[Figs. 5] Fig. 5A and Fig. 5B are diagrams explaining a problem of a conventional machine learning device.
[Fig. 6] Fig. 6 is a configuration diagram of a machine learning device according to the first embodiment of the present invention.
[Fig. 7] Fig. 7 is a diagram explaining a method of meta learning performed by a conventional machine learning device.
[Fig. 8] Fig. 8 is a diagram explaining a method of meta learning performed by a machine learning device according to the first embodiment.
[Figs. 9] Fig. 9A and Fig. 9B are diagrams explaining effects of the machine learning device according to the first embodiment.
[Fig. 10] Fig. 10 is a configuration diagram of a machine learning device according to the second embodiment of the present invention.
[Fig. 11] Fig. 11 is a diagram explaining a method of meta learning performed by a machine learning device according to the second embodiment.

### DESCRIPTION OF EMBODIMENTS

First, an explanation will be given regarding an overview of incremental few-shot learning with XtarNet. In XtarNet, extraction of task-adaptive representations (TAR) is leaned. First, a backbone network that has been pretrained on a base class dataset is used so as to obtain features of the base class. An additional module that has been meta-trained across the episodes of a novel class is then used so as to obtain the features of the novel class. The merged product of the features of the base class and the features of the novel class is called a task-adaptive representation (TAR). Classifiers for the base and novel classes use this TAR to quickly adapt to a given task and perform a classification task.

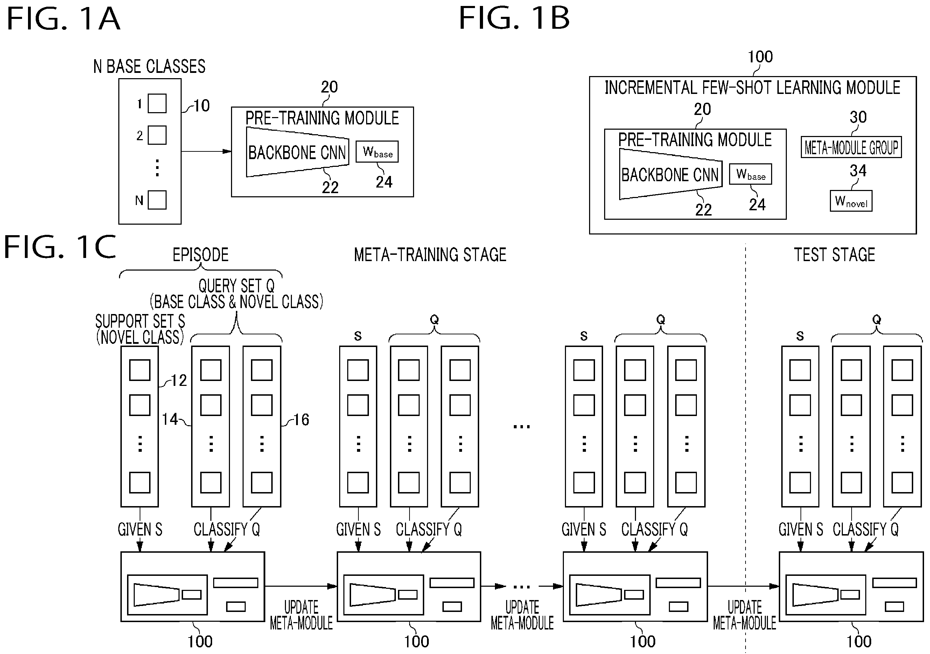

The outline of an XtarNet learning procedure will be explained with reference to FIGS. 1A to 1C.

FIG. 1A is a diagram explaining the configuration of a pre-training module 20. The pre-training module 20 includes a backbone CNN 22 and a base class classification weight 24.

A dataset 10 of a base class includes N samples. An example of the samples is an image but is not limited thereto. A backbone CNN 22 is a convolutional neural network that pre-learns the dataset 10 of the base class. The base class classification weight 24 represents a weight vector W_{base} of the base class classifier and indicates the average feature amount of the samples of the dataset 10 of the base class.

In a learning stage 1, the backbone CNN 22 is pretrained on the dataset 10 of the base class.

FIG. 1B is a diagram explaining the configuration of an incremental few-shot learning module 100. The incremental few-shot learning module 100 is a meta-module group 30 and a novel class classification weight 34 added to the pre-training module 20 shown in FIG. 1A. The meta-module group 30 includes three multilayer neural networks described later and performs post-learning on the dataset of a novel class. The number of samples included in the dataset of the novel class is smaller compared to the number of samples included in the dataset of the base class. The novel class classification weight 34 represents a weight vector Wₙₒᵥₑₗ of the novel class classifier and indicates the average feature amount of the samples of the dataset of the novel class.

In a learning stage 2, the meta-module group 30 is episodically trained based on the pre-training module 20.

FIG. 1C is a diagram explaining episodic training. The episodic training includes a meta-training stage and a test stage. The meta-training stage is executed for each episode, and the meta-module group 30 and the novel class classification weight 34 are updated. The test stage performs a classification test using the meta-module group 30 and novel class classification weight 34 updated in the meta-training stage.

Each episode consists of a support set S and a query set Q. The support set S consists of a dataset 12 of the novel class, and the query set Q consists of a dataset 14 of the base class and a dataset 16 of the novel class. In the learning stage 2, in each episode, query samples of both the base class and the novel class included in the query set Q are classified into classes based on a support sample of the given support set S, and the parameters of the meta-module group 30 and the novel class classification weight 34 are updated to minimize class classification loss.

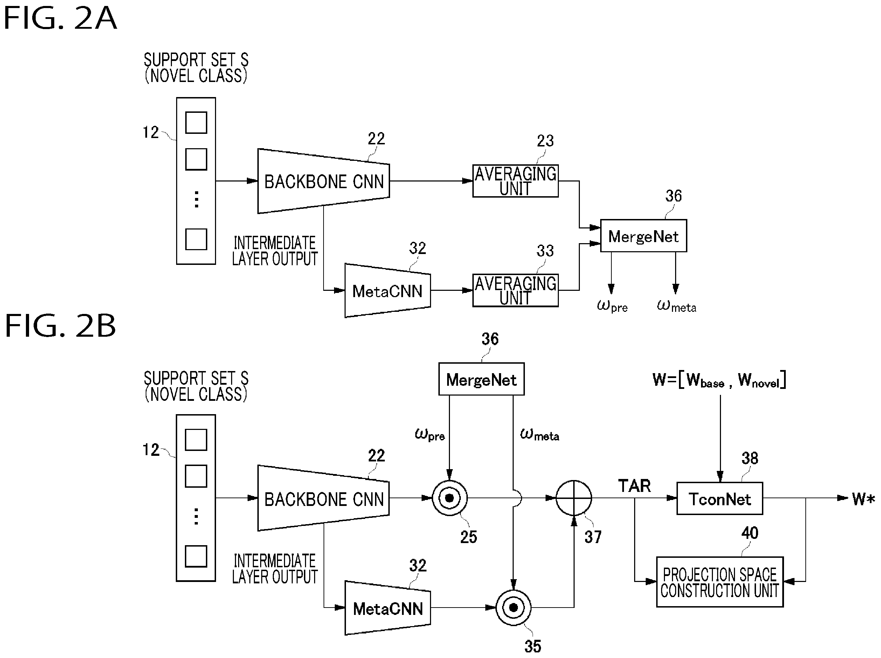

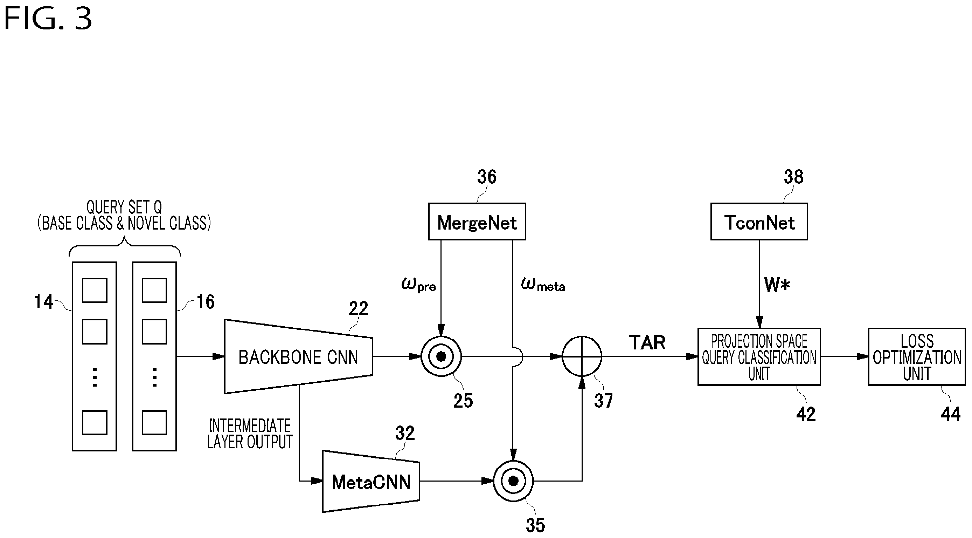

With reference to FIGS. 2A and 2B, the configuration related to the processing of the support set S in XtarNet will be explained, and with reference to FIG. 3, the configuration and learning process related to the processing of query set Q in XtarNet will be explained.

In addition to the backbone CNN 22, XtarNet utilizes the following three different meta-learnable modules as the meta-module group 30.
(1) MetaCNN: a neural network for extracting the features of a novel class
(2) MergeNet: a neural network for merging the features of the base class with the features of the novel class
(3) TconNet: a neural network for adjusting the weight of a classifier

FIG. 2A is a diagram explaining a configuration for generating task-specific merged weight vectors ωₚᵣₑ and ωₘₑₜₐ for calculating a task-adaptive representation from the support set S.

The support set S includes the dataset 12 of the novel class. Each support sample of the support set S is input into the backbone CNN22. The backbone CNN 22 processes the support sample, outputs a feature vector of the base class, which is referred to as "base feature vector," and supplies the feature vector to an averaging unit 23. The averaging unit 23 calculates the average base feature vector by averaging the base feature vector output by the backbone CNN 22 for all support samples, and inputs the average base feature vector to MergeNet 36.

Output of an intermediate layer of the backbone CNN 22 is input to a MetaCNN 32. The MetaCNN 32 processes the output of the intermediate layer of the backbone CNN 22, outputs a feature vector of the novel class, which is referred to as "novel feature vector," and supplies the feature vector to the averaging unit 33. The averaging unit 33 calculates the average novel feature vector by averaging the novel feature vector output by the MetaCNN 32 for all the support samples, and inputs the average novel feature vector to the MergeNet 36.

The MergeNet 36 processes the average base feature vector and the average novel feature vector with a neural network and outputs the task-specific merged weight vectors ωₚᵣₑ and ωₘₑₜₐ for calculating a task-adaptive representation TAR.

The backbone CNN 22 operates as a base feature vector extractor f_{θ} for extracting a base feature vector for input x, and outputs a base feature vector fₑ(x) for the input x. The intermediate layer output of the backbone CNN 22 for the input x is denoted as a_{θ}(x). The MetaCNN 32 operates as a novel feature vector extractor g for extracting a novel feature vector for the intermediate layer output a_{θ}(x) and outputs a novel feature vector g(a_{θ}(x)) for the intermediate layer output a_{θ}(x).

FIG. 2B is a diagram explaining a configuration for calculating a task-adaptive representation TAR from the support set S so as to generate a classification weight vector set W based on the task-adaptive representation TAR.

A vector product arithmetic unit 25 calculates the product for each element between the base feature vector fₑ(x) output from the backbone CNN 22 and the merged weight vector ωₚᵣₑ output from MergeNet 36 for each support sample x of the support set S, and outputs the product to a vector sum arithmetic unit 37.

A vector product arithmetic unit 35 calculates the product for each element between the novel feature vector g(a_{θ}(x)) output from the MetaCNN 32 and the merged weight vector ωₘₑₜₐ output from a MergeNet 36 for the intermediate layer output a_{θ}(x) of the backbone CNN 22 for each support sample x of the support set S, and outputs the product to the vector sum arithmetic unit 37.

The vector sum arithmetic unit 37 calculates the vector sum of the product of the base feature vector fₑ(x) and the merged weight vector ωₚᵣₑ and the product of the novel feature vector g(a_{θ}(x)) and the merged weight vector ωₘₑₜₐ, outputs the vector sum as a task-adaptive representation TAR of each support sample x of the support set S, and provides the task-adaptive representation TAR to a TconNet 38 and a projection space construction unit 40. The task-adaptive representation TAR is a merged feature vector consisting of a merged product of the base feature vector and the novel feature vector.

The calculation formula for the task-adaptive representation TAR is as follows, where the product of each component of a vector is expressed as ×. $TAR = {ω}_{pre} \times {f}_{θ} \left(x\right) + {ω}_{meta} \times g \left({a}_{θ}\left(x\right)\right)$

The calculation formula for the task adaptive representation TAR is to find the sum of element-by-element products between the merged weight vector and the feature vector. The task adaptive representation TAR is calculated for each support sample in the support set S.

The TconNet 38 receives the input of a classification weight vector set W = [W_{base}, Wₙₒᵥₑₗ], and outputs a task-adjusted classification weight vector set W* using the task adaptive representation TAR of each support sample.

The projection space construction unit 40 constructs a task-adaptive projection space M such that the average {Cₖ} for each class k of the task-adaptive representation TAR of each support sample and W* obtained after task adjustment align in the projection space M.

FIG. 3 is a diagram explaining a configuration for calculating a task-adaptive representation TAR from a query set Q and classifying a query sample into a class based on the task-adaptive representation TAR and a task-adjusted classification weight vector set W* so as to minimize class classification loss.

The vector product arithmetic unit 25 calculates the product for each element between the base feature vector f_{θ}(x) output from the backbone CNN 22 and the merged weight vector ωₚᵣₑ output from the MergeNet 36 for each query sample x of the query set Q, and outputs the product to the vector sum arithmetic unit 37.

The vector product arithmetic unit 35 calculates the product for each element between the novel feature vector g(a_{θ}(x)) output from the MetaCNN 32 and the merged weight vector ωₘₑₜₐ output from the MergeNet 36 for the intermediate layer output a_{θ}(x) of the backbone CNN 22 for each query sample x of the query set Q, and outputs the product to the vector sum arithmetic unit 37.

The vector sum arithmetic unit 37 calculates the vector sum of the product of the base feature vector fₑ(x) and the merged weight vector ωₚᵣₑ and the product of the novel feature vector g(a_{θ}(x)) and the merged weight vector ωₘₑₜₐ, outputs the vector sum as a task-adaptive representation TAR of each query sample x of the query set Q, and provides the task-adaptive representation TAR to a projection space query classification unit 42.

The task-adjusted classification weight vector set W* output by the TconNet 38 is input to the projection space query classification unit 42.

The projection space query classification unit 42 calculates the Euclidean distance between the position of the task-adaptive representation TAR calculated for each query sample of the query set Q and the position of the average feature vector of a classification target class in the projection space M, and classifies the query sample into the closest class. It should be noted here that by the operation of the projection space construction unit 40, the average position of the classification target class in the projection space M aligns with the task-adjusted classification weight vector set W*.

A loss optimization unit 44 evaluates the class classification loss in the query sample by a cross-entropy function, and proceeds with learning such that the classification result of the query set Q approaches the correct answer so as to minimize the class classification loss. This allows learnable parameters of the MetaCNN 32, the MergeNet 36, and the TconNet 38 and a novel class classification weight Wₙₒᵥₑₗ to be updated such that the distance between the position of the task-adaptive representation TAR calculated for the query sample and the position of the average feature vector of the classification target class, i.e., the position of the task-adjusted classification weight vector set W*, becomes small.

### First Embodiment

In explaining a machine learning device 210 according to the first embodiment of the present invention, a conventional machine learning device 200 will be explained as a premise.

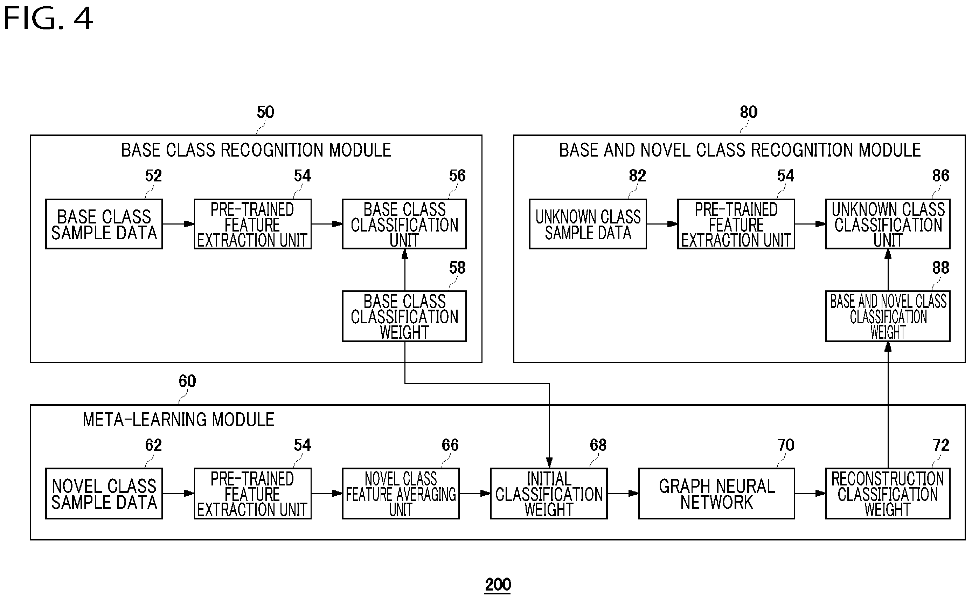

Fig. 4 is a configuration diagram of the conventional machine learning device 200. An explanation will be given regarding the configuration of the reconstruction of a class classification weight (prototype) using the graph neural network 70 described in Non-Patent Literature 2.

The machine learning device 200 learns to reconstruct the class classification weight in incremental few-shot learning. Pretraining is performed on a base class dataset so as to obtain a trained feature extractor for the base class and the class classification weight of the base class. The classification weights of novel classes with a small number of samples are calculated using the trained feature extractor. In the task of incremental few-shot learning, the base class and the novel classes need to be classified jointly. The classification weight of the base class and the classification weights of the novel classes are simultaneously input to the graph neural network 70, and classification weights after the reconstruction are output. Meta-learning of the graph neural network 70, which allows for the learning of the interdependent relationship between the base class and the novel classes, is performed so as to obtain the optimal class classification weights for joint classification.

The machine learning device 200 includes a base class recognition module 50, a meta-learning module 60, and a base and novel class recognition module 80.

The base class recognition module 50 pre-trains the base class feature extractor and the classification weight of the base class using the training data of the base class, and generates a pre-trained model. The figure illustrates a pre-trained base class feature extraction unit as a pre-trained feature extraction unit 54 and illustrates the pre-trained base class classification weight as a base class classification weight 58.

The meta-learning module 60 performs meta-learning of a meta-module that is based on the pre-trained model of the base class recognition module 50 using training data for the novel classes. Meta-learning of the meta-module is performed in an episodic learning form. A support set consists of samples in the novel classes, and a query set consists of samples in the base class and samples in the novel classes. This learning is intended to classify query samples from both the base class and the novel classes based on the support set.

The base and novel class recognition module 80 classifies unknown classes using the meta-module meta-learned in the meta-learning module 60.

In the base class recognition module 50, the pre-trained feature extraction unit 54 uses base class sample data 52 as input and extracts the feature vector of a sample of the base class using the pre-trained model. A base class classification unit 56 uses the feature vectors of the samples in the base class as input and classifies the samples in the base class using the base class classification weight 58.

In the conventional machine learning device 200, since the pre-trained model generated in the base class recognition module 50 is directly used for feature extraction of samples in a novel class in the meta-learning module 60, the pre-trained feature extraction unit 54 of the meta-learning module 60 is the same as the pre-trained feature extraction unit 54 of the base class recognition module 50.

In the meta-learning module 60 of the conventional machine learning device 200, only the graph neural network 70 is subject to meta-learning. Based on the pre-trained model, the graph neural network 70, which is a meta-module, is trained in an episodic manner. For a support set consisting of novel classes, feature vectors output from the pre-trained feature extraction unit 54 are averaged for each class, and the classification weights of the novel classes are calculated. The classification weight of the basic class and the classification weights of the novel classes are both input to the graph neural network 70, and classification weights after the reconstruction are output. The parameters of the graph neural network 70 are optimized with a query set consisting of the base class and the novel classes. For the optimization method for the graph neural network 70, the method described in Non-Patent Literature 2 is used.

In the meta-learning module 60, the pre-trained feature extraction unit 54 uses novel class sample data 62 as input and extracts the feature vectors of samples in the novel classes using the pre-trained model. A novel class feature averaging unit 66 averages the feature vectors of the samples in the novel classes for each class and calculates the classification weights of the novel classes.

The base class classification weight 58 used by the base class classification unit 56 of the base class recognition module 50 and the classification weights of the novel classes output by the novel class feature averaging unit 66 are combined and input to the graph neural network 70 as an initial classification weight 68.

The graph neural network 70 uses the initial classification weight 68, which is a combination of the classification weight of the base class and the classification weights of the novel classes, as input, performs meta-learning of the dependence relationship between the base class and the novel classes, and outputs a reconstruction classification weight 72.

The base and novel class recognition module 80 uses the reconstruction classification weight 72 meta-learned by the graph neural network 70 as a base and novel class classification weight 88.

In the conventional machine learning device 200, since the pre-trained model generated in the base class recognition module 50 is directly used for feature extraction of samples in an unknown class in the base and novel class recognition module 80, the pre-trained feature extraction unit 54 of the base and novel class recognition module 80 is the same as the pre-trained feature extraction unit 54 of the base class recognition module 50.

Using the classification weight obtained after the reconstruction, the base and novel class recognition module 80 of the conventional machine learning device 200 performs a distance calculation on test samples consisting of the base class and the novel classes with respect to the classification weight obtained after the reconstruction and classifies the test samples into a class with the closest distance.

In the base and novel class recognition module 80, the pre-trained feature extraction unit 54 uses unknown class sample data 82 as input and extracts the feature vector of a sample of the unknown class using the pre-trained model. An unknown class classification unit 86 uses the feature vector of the sample of the unknown class as input and classifies the sample of the unknown class using the reconstructed base and novel class classification weight 88. More specifically, the unknown class classification unit 86 classifies the sample of the unknown class into a class with the closest distance between the feature vector of the sample of the unknown class and the reconstructed base and novel class classification weight 88.

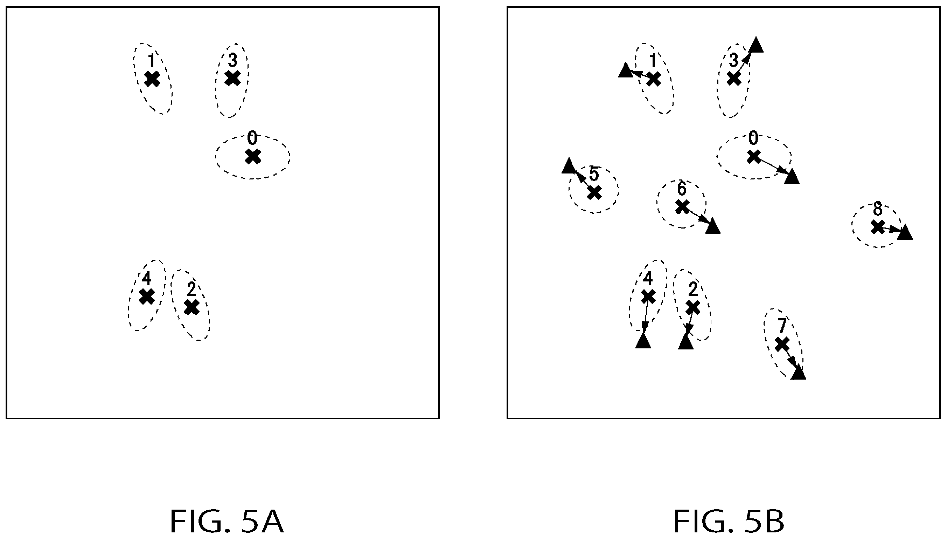

Fig. 5A and Fig. 5B are diagrams explaining a problem of a conventional machine learning device 200. The figures illustrate the feature vector of each image sample and the classification weight of each class that are visualized in a two-dimensional space.

Fig. 5A shows the feature vectors and classification weights of image samples in five base classes (numbered 0 to 4) after pre-training. For each base class, the classification weight is denoted by x, and the set of feature vectors of the image samples is indicated by a dotted enclosure.

Fig. 5B shows the feature vectors and classification weights of image samples in five base classes (numbered 0 to 4) and four novel classes (numbered 5 to 8). For each class, the classification weight before reconstruction is denoted by x, the classification weight after reconstruction is indicated by a triangle, and the set of feature vectors of the image samples is indicated by a dotted enclosure. The change in classification weights before and after reconstruction is indicated by arrows.

The classification weights after the reconstruction move in the direction of achieving good class classification boundaries; however, since the feature vector of each image sample itself does not change, the set of the feature vectors of the image samples (illustrated by dotted enclosures) and the classification weights after the reconstruction (illustrated by triangles) of corresponding classes are separated, and there is a risk that the class classification accuracy may be lowered.

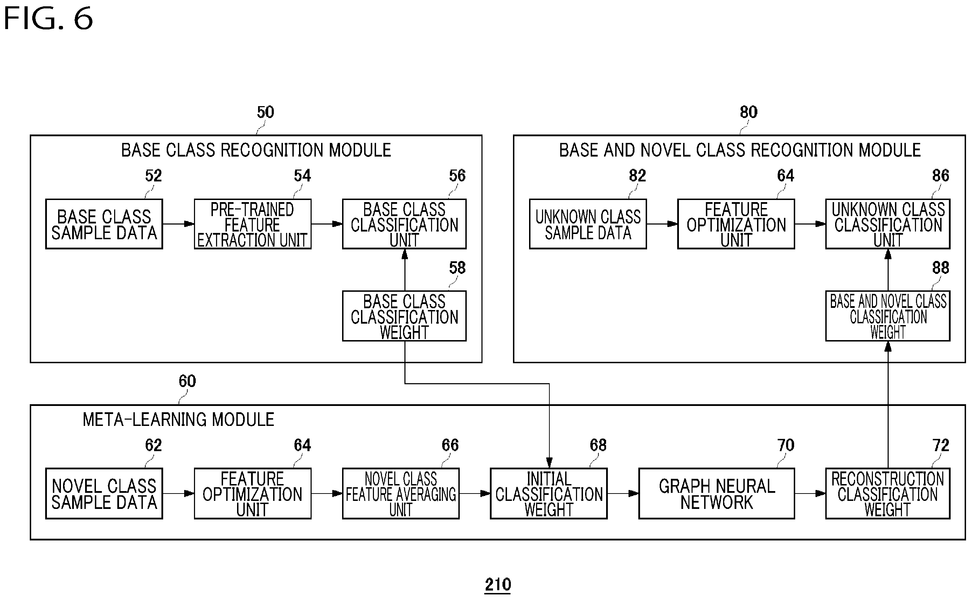

Fig. 6 is a configuration diagram of a machine learning device 210 according to the first embodiment of the present invention. In the conventional machine learning device 200, the pre-trained feature extraction unit 54 of the base class recognition module 50 is directly used in the meta-learning module 60 and the base and novel class recognition module 80. Meanwhile, in the machine learning device 210 according to the first embodiment, a feature optimization unit 64 is used instead of the pre-trained feature extraction unit 54 of the base class recognition module 50 in the base class recognition module 50 in the meta-learning module 60 and the base and novel class recognition module 80. The conventional machine learning device 200 and the machine learning device 210 are different in this regard and are the same regarding the rest of the structures. Thus, an explanation will be given mainly regarding the differences, and the explanation of common features is omitted as appropriate.

In the conventional machine learning device 200, only the graph neural network 70 is subject to meta-learning in the meta-learning module 60. However, in the machine learning device 210 according to the first embodiment, the feature optimization unit 64 and the graph neural network 70 are subject to meta-learning in the meta-learning module 60.

The feature optimization unit 64 includes an optimization module that is based on the pre-trained model of the pre-trained feature extraction unit 54 of the meta-learning module 60. An example of the feature optimization unit 64 is XtarNet described above. In XtarNet, a meta-module group 30 is episodically trained based on the pre-training module 20 that has pre-trained the base class. The feature optimization unit 64 can be realized using any meta-module, not limited to XtarNet, as long as the meta-modules can be updated by training data of novel classes based on a pre-trained model of the base class in the same way as in XtarNet.

In the meta-learning module 60 of the machine learning device 210 according to the first embodiment, the graph neural network 70 and the feature optimization unit 64 are subject to meta-learning. Based on the pre-trained model, the graph neural network 70 and the feature optimization unit 64, which are meta-modules, are trained in an episodic manner. For a support set consisting of novel classes, feature vectors output from the feature optimization unit 64 are averaged for each class, and the classification weights of the novel classes are calculated. The classification weight of the basic class and the classification weights of the novel classes are both input to the graph neural network 70, and classification weights after the reconstruction are output. The parameters of the graph neural network 70 and the parameters of the feature optimization unit 64 are optimized with a query set consisting of the base class and the novel classes. For the optimization method for the graph neural network 70, the method described in Non-Patent Literature 2 is used. An example of the optimization method of the feature optimization unit 64 is a method of learning to minimize the cross-entropy loss of the query set. The optimization by the feature optimization unit 64 allows for adjustment of the feature vectors of the samples in a direction that brings the feature vectors of the samples closer to the classification weights after the reconstruction.

The feature optimization unit 64 updates the parameters of the meta-module by meta-learning the novel classes and optimizing the feature vectors of the samples in the novel classes, while keeping the pre-trained model in which the basic class has been learned fixed.

The initial classification weight 68 averages the optimized feature vectors of the samples in the novel classes for each class and calculates the classification weights of the novel classes.

The base class classification weight 58 used by the base class classification unit 56 of the base class recognition module 50 and the optimized classification weights of the novel classes output by the novel class feature averaging unit 66 are combined and input to the graph neural network 70 as an initial classification weight 68.

The graph neural network 70 uses the initial classification weight 68, which is a combination of the classification weight of the base class and the optimized classification weights of the novel classes, as input, performs meta-learning of the dependence relationship between the base class and the novel classes, and outputs a reconstruction classification weight 72.

The base and novel class recognition module 80 uses the reconstruction classification weight 72 meta-learned by the graph neural network 70 as a base and novel class classification weight 88.

In machine learning device 210 according to the first embodiment, since an optimization module generated in the meta-learning module 60 is used for feature extraction of samples in an unknown class in the meta-learning module 60, the feature optimization unit 64 of the base and novel class recognition module 80 is the same as the feature optimization unit 64 of the meta-learning module 60.

In the base and novel class recognition module 80, the feature optimization unit 64 uses unknown class sample data 82 as input and extracts the feature vector of a sample of the unknown class using the optimization module. An unknown class classification unit 86 uses the feature vector of the sample of the unknown class as input and classifies the sample of the unknown class using the reconstructed base and novel class classification weight 88. More specifically, the unknown class classification unit 86 classifies the sample of the unknown class into a class with the closest distance between the feature vector of the sample of the unknown class and the reconstructed base and novel class classification weight 88.

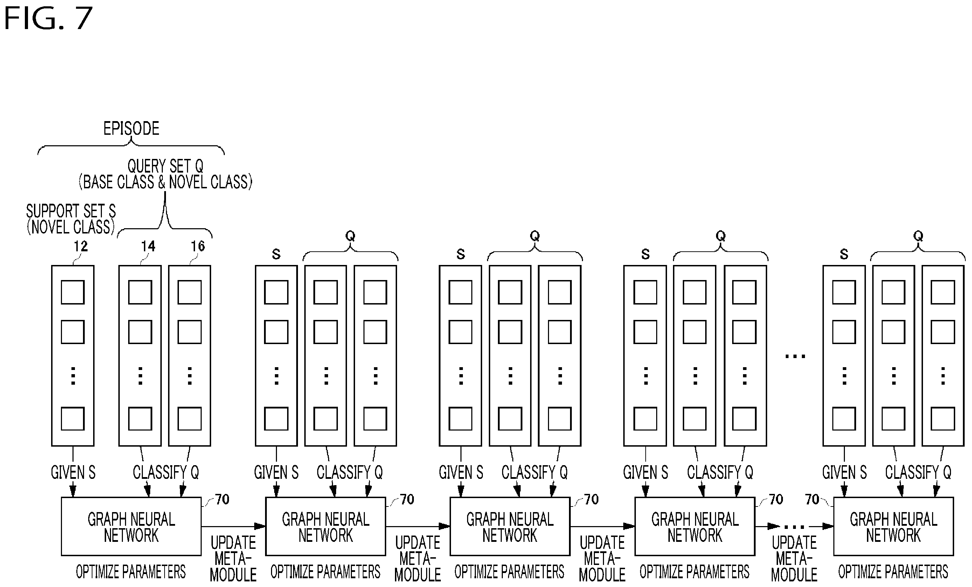

Fig. 7 is a diagram explaining a method of meta learning performed by a conventional machine learning device 200. The meta-learning module 60 of the conventional machine learning device 200 optimizes the parameters of the graph neural network 70, which is a meta-module, for each episode and updates the graph neural network 70.

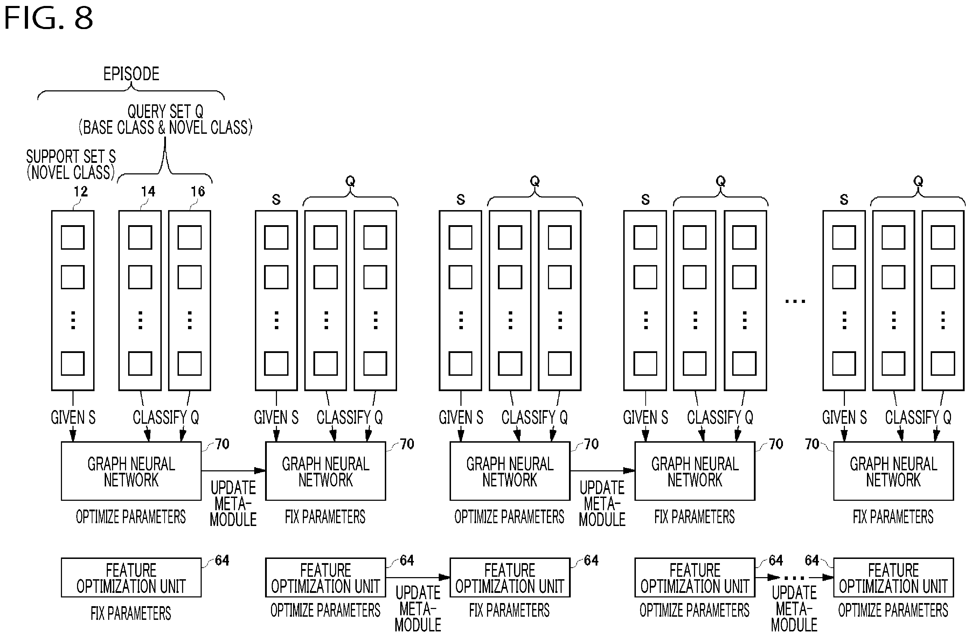

Fig. 8 is a diagram explaining a method of meta learning performed by the machine learning device 210 according to the first embodiment. In the meta-learning module 60 of the machine learning device 210 according to the first embodiment, the graph neural network 70, which is a meta-module, and the feature optimization unit 64 are alternately optimized and updated for each episode.

Each episode consists of a support set S and a query set **Q.** The support set S consists of a dataset 12 of the novel class, and the query set Q consists of a dataset 14 of the base class and a dataset 16 of the novel class. In a meta-learning stage, in each episode, query samples in both the base class and the novel class included in the query set Q are classified into classes based on a support sample of the given support set S, and the graph neural network 70 or the feature optimization unit 64 is updated so as to minimize the loss of the classification into classes.

In odd-numbered episodes, the parameters of the feature optimization unit 64 are fixed, the parameters of the graph neural network 70 are optimized, and only the graph neural network 70 is updated.

In even-numbered episodes, the parameters of the graph neural network 70 are fixed, the parameters of the feature optimization unit 64 are optimized, and only the feature optimization unit 64 is updated.

In this way, mutual learning of the graph neural network 70 and the feature optimization unit 64 is repeated. The mutual learning is not limited to one unit of episode and may be performed for several units of episodes.

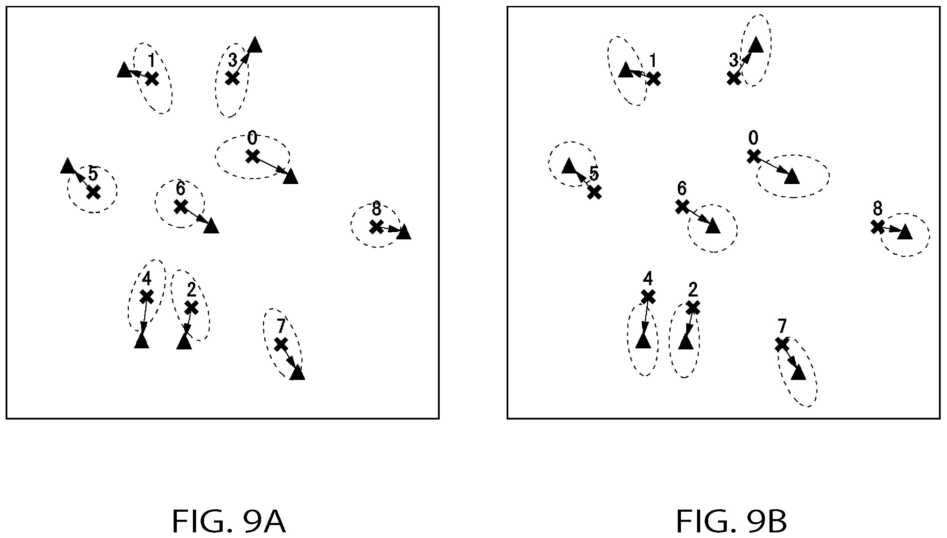

Figs. 9A and 9B are diagrams explaining effects of the machine learning device 210 according to the first embodiment. The figures illustrate the feature vector of each image sample and the classification weight of each class that are visualized in a two-dimensional space.

Fig. 9A shows the results of the reconstruction of classification weights performed by the conventional machine learning device 200 for comparison, and shows the feature vectors and classification weights of image samples in five base classes (numbered 0 to 4) and four novel classes (numbered 5 to 8) in the same way as in Fig. 5B. For each class, the classification weight before reconstruction is denoted by x, the classification weight after reconstruction is indicated by a triangle, and the set of feature vectors of the image samples is indicated by a dotted enclosure. The change in classification weights before and after reconstruction is indicated by arrows.

In the reconstruction of the classification weights by the conventional machine learning device 200, the classification weights move in the direction of achieving good class classification boundaries; however, since the feature vector of each image sample itself does not change, there is a risk that test samples are classified into wrong classes.

Fig. 9B shows the results of the reconstruction of classification weights performed by the machine learning device 210 according to the first embodiment. The classification weights after the reconstruction move in the direction of achieving good class classification boundaries, and the feature vectors of the respective image samples are also adjusted so as to approach the classification weights. Therefore, the set of feature vectors of the image samples (illustrated by dotted enclosures) and the classification weights after the reconstruction of the corresponding classes (illustrated by triangles) are not separated, avoiding a decrease in the class classification.

As described, according to the machine learning device 210 according to the first embodiment, by mutually learning the optimization of feature vectors and the reconstruction of classification weights, the feature vectors of the corresponding samples can be gathered near the classification weights after the reconstruction, and the class classification accuracy can be improved.

### Second Embodiment

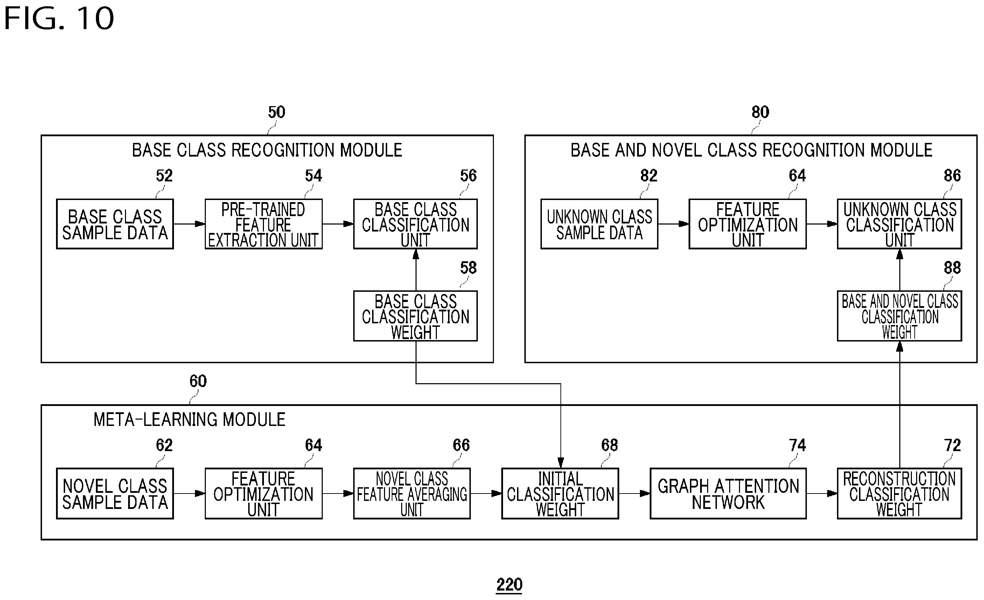

Fig. 10 is a configuration diagram of a machine learning device 220 according to the second embodiment of the present invention.

In the meta-learning module 60 of the machine learning device 210 according to the first embodiment, a graph neural network 70 is used as a meta-module. However, in the meta-learning module 60 of the machine learning device 220 according to the second embodiment, a Graph Attention Network 74 according to Non-Patent Literature 3 is used instead of the graph neural network 70. The rest of the structures of the machine learning device 200 according to the second embodiment are the same as those of the machine learning device 210 according to the first embodiment. Thus, an explanation will be given mainly regarding the differences, and the explanation of common features is omitted as appropriate.

Continuously evolved classifiers (CEC) described in Non-Patent Literature 3 meta-learn the graph attention network 74 in an episodic manner by sampling novel classes with a small number of samples pseudo-created from the basic class as pseudo-incremental tasks based on a backbone model R in which the basic class has been learned.

In the graph neural network 70, a support set of an episode consists only of samples in the novel classes, and a query set consists of samples in the base class and the novel classes. The graph attention network 74 is different in that both the support set and the query set consist of the samples in the base class and the novel classes.

Just like the feature optimization unit 64 of the machine learning device 210 according to the first embodiment, an example of the feature optimization unit 64 of the machine learning device 220 according to the second embodiment is XtarNet.

In the meta-learning module 60 of the machine learning device 220 according to the second embodiment, the graph attention network 74 and the feature optimization unit 64 are subject to meta-learning. By sampling the pseudo-incremental tasks from the basic class, meta-learning is performed on the graph attention network 74, which is a meta-module, and the feature optimization unit 64. For a support set consisting of the base class and the novel classes, feature vectors output from the feature optimization unit 64 are averaged for each class, and the classification weight of the base class and the classification weights of the novel classes are calculated. The classification weight of the basic class and the classification weights of the novel classes are both input to the graph attention network 74, and classification weights after the reconstruction are output. The parameters of the graph attention network 74 and the parameters of the feature optimization unit 64 are optimized with a query set consisting of the base class and the novel classes. For the optimization method for the graph attention network 74, the method described in Non-Patent Literature 3 is used. An example of the optimization method of the feature optimization unit 64 is a method of learning to minimize the cross-entropy loss of the query set. The optimization by the feature optimization unit 64 allows for adjustment of the feature vectors of the samples in a direction that brings the feature vectors of the samples closer to the classification weights after the reconstruction.

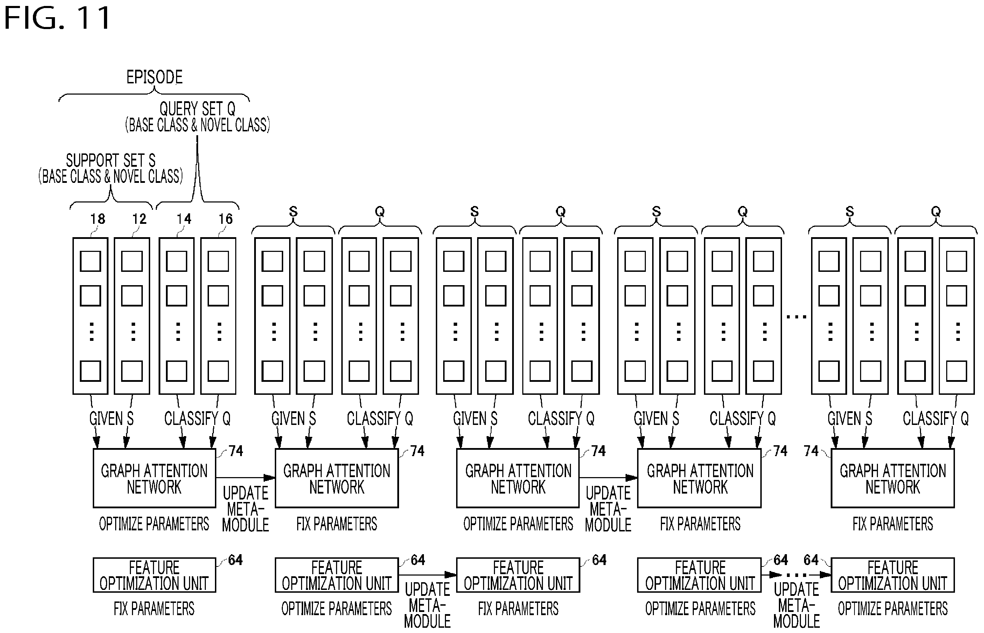

Fig. 11 is a diagram explaining a method of meta learning performed by the machine learning device 220 according to the second embodiment. In the meta-learning module 60 of the machine learning device 220 according to the second embodiment, the graph attention network 74, which is a meta-module, and the feature optimization unit 64 are alternately optimized and updated for each episode.

Each episode consists of a support set S and a query set Q. The support set S consists of a dataset 18 of a base class and a dataset 12 of a novel class, and the query set Q consists of a dataset 14 of a base class and a dataset 16 of a novel class. In a meta-learning stage, in each episode, query samples of both the base class and the novel class included in the query set Q are classified into classes based on a support sample of the given support set S, and the graph attention network 74 or the feature optimization unit 64 is updated so as to minimize the loss of the classification into classes.

In odd-numbered episodes, the parameters of the feature optimization unit 64 are fixed, the parameters of the graph attention network 74 are optimized, and only the graph attention network 74 is updated.

In even-numbered episodes, the parameters of the graph attention network 74 are fixed, the parameters of the feature optimization unit 64 are optimized, and only the feature optimization unit 64 is updated.

In this way, mutual learning of the graph attention network 74 and the feature optimization unit 64 is repeated. The mutual learning is not limited to one unit of episode and may be performed for several units of episodes.

The above-described various processes in the machine learning devices 210 and 220 can of course be implemented by hardware-based devices such as a CPU and a memory and can also be implemented by firmware stored in a read-only memory (ROM), a flash memory, etc., or by software on a computer, etc. The firmware program or the software program may be made available on, for example, a computer readable recording medium. Alternatively, the programs may be transmitted to and/or received from a server via a wired or wireless network. Still alternatively, the programs may be transmitted and/or received in the form of data transmission over terrestrial or satellite digital broadcast systems.

As described above, according to the machine learning devices 210 and 220 according to the first and second embodiments, a structure for optimizing the features of each class is added, and the optimization of the features of each class and the reconstruction of the classification weight of each class are mutually learned. Since not only the classification weight of each class is reconstructed but also the feature space of the samples in each class itself is reconstructed, it is possible to improve the accuracy of class classification.

Described above is an explanation of the present invention based on the embodiments. The embodiments are intended to be illustrative only, and it will be obvious to those skilled in the art that various modifications to constituting elements and processes could be developed as far as such modifications are also within the scope of the present invention as defined by the claims.

### INDUSTRIAL APPLICABILITY

The present invention is applicable to machine learning technology.

### REFERENCE SIGNS LIST

10 dataset of base class, 12 dataset of novel class, 14 dataset of base class, 16 dataset of novel class, 18 dataset of base class, 20 pre-training module, 22 backbone CNN, 23 averaging unit, 24 base class classification weight, 30 meta-module group, 32 MetaCNN, 33 averaging unit, 34 novel class classification weight, 36 MergeNet, 38 TconNet, 40 projection space construction unit, 42 projection space query classification unit, 44 loss optimization unit, 50 base class recognition module, 52 base class sample data, 54 pre-trained feature extraction unit, 56 base class classification unit, 58 base class classification weight, 60 meta-learning module, 62 novel class sample data, 64 feature optimization unit, 66 novel class feature averaging unit, 68 initial classification weight, 70 graph neural network, 72 reconstruction classification weight, 74 graph attention network, 80 base and novel class recognition module, 82 unknown class sample data, 86 unknown class classification unit, 88 base and novel class classification weight, 100 incremental few-shot learning module, 200, 210, 220 machine learning device.

## Claims

1. A machine learning device (210, 220) configured to perform continual learning of a classification of a novel class with fewer image samples than a base class, the machine learning device comprising:
a base class feature extraction unit (54) configured to extract feature vectors of the image samples in the base class using a pre-trained model;
a base class classification unit (56) configured to use the extracted feature vectors of the image samples in the base class as input and to classify the image samples in the base class using a classification weight vector of the base class;
a meta-learning module (60) configured to train a graph neural network unit (70, 74) and a feature optimization unit (64) in an episodic manner based on the pre-trained model thus generating respective meta-modules; wherein training in the episodic manner comprises meta-training by, in each episode of a plurality of episodes, classifying query image samples from both the base class and the novel class based on support image samples from the novel class so as to minimize a loss of classifying the query image samples into the base class and the novel class, thereby learning a dependence relationship between the base class and the novel class; and wherein the meta-learning module is further configured to: in odd-numbered episodes, keep parameters of the feature optimization unit fixed and learn parameters of the graph neural network unit; and in even-numbered episodes, keep the parameters of the graph neural network unit fixed and learn the parameters of the feature optimization unit; and
a base and novel class recognition module (80) configured to classify image samples in unknown classes using the meta-modules;
wherein the meta-learning module (60) comprises:
the feature optimization unit (64) including its meta-module, and being configured to perform meta-learning of its meta-module in order to optimize feature vectors of the image samples in the novel class, and being further configured to extract feature vectors of the image samples in one of the unknown classes using its meta-module;
a novel class feature averaging unit (66) configured to, for each novel class in a plurality of novel classes, average the optimized feature vectors of the image samples in the respective novel class and to calculate a classification weight vector of the novel class based on the is average feature vector;
the graph neural network unit (70, 74) configured to use the classification weight vector of the base class and the classification weight vector of the novel class as input, in order to perform meta-learning of the dependence relationship between the base class and the novel class, thus outputting a reconstruction classification weight vector; and
the base and novel class recognition module (80) comprising:
an unknown class classification unit (86) configured to use, as input, the extracted feature vectors of the image samples in the unknown class and to classify the image samples in the unknown class using the reconstruction classification weight vector.

2. A computer implemented machine learning method that performs continual learning of a classification of a novel class with fewer image samples than a base class, the computer-implemented machine learning method comprising:
a base class feature extraction step for extracting feature vectors of the image samples in the base class using a pre-trained model;
a base class classification step for using the extracted feature vectors of the image samples in the base class as input and classifying the image samples in the base class using a classification weight vector of the base class;
a meta-learning step for training a graph neural network unit and a feature optimization unit in an episodic manner based on the pre-trained model thus generating respective meta-modules; wherein training in the episodic manner comprises meta-training by, in each episode of a plurality of episodes, classifying query image samples from both the base class and the novel class based on support image samples from the novel class so as to minimize a loss of classifying the query image samples into the base class and the novel class, thereby learning a dependence relationship between the base class and the novel class; and wherein the meta-learning step comprises: in odd-numbered episodes, keeping parameters of the feature optimization unit fixed and learning parameters of the graph neural network unit; and in even-numbered episodes, keeping the parameters of the graph neural network unit fixed and learning the parameters of the feature optimization unit; and
a base and novel class recognition step for classifying image samples in unknown classes using the meta-modules; wherein
the meta-learning step comprises:
performing, by the feature optimization unit including its meta-module, meta-learning of its meta-module for optimizing feature vectors of the image samples in the novel class and extracting, by the feature optimization unit, feature vectors of the image samples in one of the unknown classes using its meta-module;
a novel class feature averaging step for, for each novel class in a plurality of novel classes, averaging the optimized feature vectors of the image samples in the respective novel class and calculating a classification weight vector of the novel class based on the average feature vector; and
using, by the graph neural network unit, the classification weight vector of the base class and the classification weight vector of the novel class as input, in order to perform meta-learning of the dependence relationship between the base class and the novel class, thus outputting a reconstruction classification weight vector; and
the base and novel class recognition step comprising:
an unknown class classification step for using, as input, the extracted feature vectors of the image samples in the unknown class and classifying the image samples in the unknown class using the reconstruction classification weight vector.

3. A machine learning program configured to perform continual learning of a classification of a novel class with fewer image samples than a base class, the machine learning program comprising instructions which, when executed by a computer, cause the computer to perform the method according to claim 2.

## Patentansprüche

1. Eine maschinelle Lerneinrichtung (210, 220), eingerichtet zum Durchführen eines kontinuierlichen Lernens einer Klassifikation einer neuen Klasse mit weniger Bildproben als eine Basisklasse, wobei die maschinelle Lerneinrichtung Folgendes aufweist:
eine Basisklassen-Merkmalsextraktions-Einheit (54), eingerichtet zum Extrahieren von Merkmalsvektoren der Bildproben in der Basisklasse unter Verwendung eines vortrainierten Modells;
eine Basisklassen-Klassifikations-Einheit (56), eingerichtet zum Verwenden der extrahierten Merkmalsvektoren der Bildproben in der Basisklasse als Eingabe und zum Klassifizieren der Bildproben in der Basisklasse unter Verwendung eines Klassifikations-Gewichtsvektors der Basisklasse;
ein Meta-Lern-Modul (60), eingerichtet zum Trainieren einer Graph-Neuronales-Netzwerk-Einheit (70, 74) und einer Merkmal-Optimierungs-Einheit (64) auf episodische Weise basierend auf dem vortrainierten Modell, wodurch jeweilige Meta-Module erzeugt werden; wobei das Training auf episodische Weise Meta-Training umfasst, indem in jeder Episode einer Vielzahl von Episoden Abfrage-Bildproben sowohl aus der Basisklasse als auch aus der neuen Klasse basierend auf Stütz-Bildproben aus der neuen Klasse klassifiziert werden, um einen Verlust des Klassifizierens der Abfrage-Bildproben in die Basisklasse und die neue Klasse zu minimieren, wodurch eine Abhängigkeitsbeziehung zwischen der Basisklasse und der neuen Klasse erlernt wird; und wobei das Meta-Lern-Modul ferner eingerichtet ist zum: in ungeradzahligen Episoden, Festhalten von Parametern der Merkmal-Optimierungs-Einheit und Erlernen von Parametern der Graph-Neuronales-Netzwerk-Einheit; und in geradzahligen Episoden, Festhalten der Parameter der Graph-Neuronales-Netzwerk-Einheit und Erlernen der Parameter der Merkmal-Optimierungs-Einheit; und
ein Basisklassen- und Neue-Klassen-Erkennungsmodul (80), eingerichtet zum Klassifizieren von Bildproben in unbekannten Klassen unter Verwendung der Meta-Module; wobei
das Meta-Lern-Modul (60) Folgendes aufweist:
die Merkmal-Optimierungs-Einheit (64) einschließlich ihres Meta-Moduls, eingerichtet zum Durchführen eines Meta-Lernens ihres Meta-Moduls, um Merkmalsvektoren der Bildproben in der neuen Klasse zu optimieren, und ferner eingerichtet zum Extrahieren von Merkmalsvektoren der Bildproben in einer der unbekannten Klassen unter Verwendung ihres Meta-Moduls;
eine Neue-Klassen-Merkmal-Mittelungs-Einheit (66), eingerichtet zum, für jede neue Klasse in einer Vielzahl von neuen Klassen, Mitteln der optimierten Merkmalsvektoren der Bildproben in der jeweiligen neuen Klasse und zum Berechnen eines Klassifikations-Gewichtsvektors der neuen Klasse basierend auf dem gemittelten Merkmalsvektor;
die Graph-Neuronales-Netzwerk-Einheit (70, 74), eingerichtet zum Verwenden des Klassifikations-Gewichtsvektors der Basisklasse und des Klassifikations-Gewichtsvektors der neuen Klasse als Eingabe, um ein Meta-Lernen der Abhängigkeitsbeziehung zwischen der Basisklasse und der neuen Klasse durchzuführen, wodurch ein Rekonstruktions-Klassifikations-Gewichtsvektor ausgegeben wird; und
das Basisklassen- und Neue-Klassen-Erkennungsmodul (80) aufweisend:
eine Unbekannte-Klassen-Klassifikations-Einheit (86), eingerichtet zum Verwenden, als Eingabe, der extrahierten Merkmalsvektoren der Bildproben in der unbekannten Klasse und zum Klassifizieren der Bildproben in der unbekannten Klasse unter Verwendung des Rekonstruktions-Klassifikations-Gewichtsvektors.

2. Ein computerimplementiertes maschinelles Lernverfahren, das ein kontinuierliches Lernen einer Klassifikation einer neuen Klasse mit weniger Bildproben als eine Basisklasse durchführt, wobei das computerimplementierte maschinelle Lernverfahren Folgendes aufweist:
einen Basisklassen-Merkmalsextraktions-Schritt zum Extrahieren von Merkmalsvektoren der Bildproben in der Basisklasse unter Verwendung eines vortrainierten Modells;
einen Basisklassen-Klassifikations-Schritt zum Verwenden der extrahierten Merkmalsvektoren der Bildproben in der Basisklasse als Eingabe und zum Klassifizieren der Bildproben in der Basisklasse unter Verwendung eines Klassifikations-Gewichtsvektors der Basisklasse;
einen Meta-Lern-Schritt zum Trainieren einer Graph-Neuronales-Netzwerk-Einheit und einer Merkmal-Optimierungs-Einheit auf episodische Weise basierend auf dem vortrainierten Modell, wodurch jeweilige Meta-Module erzeugt werden; wobei das Training auf episodische Weise Meta-Training umfasst, indem in jeder Episode einer Vielzahl von Episoden Abfrage-Bildproben sowohl aus der Basisklasse als auch aus der neuen Klasse basierend auf Stütz-Bildproben aus der neuen Klasse klassifiziert werden, um einen Verlust des Klassifizierens der Abfrage-Bildproben in die Basisklasse und die neue Klasse zu minimieren, wodurch eine Abhängigkeitsbeziehung zwischen der Basisklasse und der neuen Klasse erlernt wird; und wobei der Meta-Lern-Schritt aufweist: in ungeradzahligen Episoden, Festhalten von Parametern der Merkmal-Optimierungs-Einheit und Erlernen von Parametern der Graph-Neuronales-Netzwerk-Einheit; und in geradzahligen Episoden, Festhalten der Parameter der Graph-Neuronales-Netzwerk-Einheit und Erlernen der Parameter der Merkmal-Optimierungs-Einheit; und
einen Basisklassen- und Neue-Klassen-Erkennungs-Schritt zum Klassifizieren von Bildproben in unbekannten Klassen unter Verwendung der Meta-Module; wobei der Meta-Lern-Schritt Folgendes aufweist:
Durchführen, durch die Merkmal-Optimierungs-Einheit einschließlich ihres Meta-Moduls, eines Meta-Lernens ihres Meta-Moduls zum Optimieren von Merkmalsvektoren der Bildproben in der neuen Klasse und Extrahieren, durch die Merkmal-Optimierungs-Einheit, von Merkmalsvektoren der Bildproben in einer der unbekannten Klassen unter Verwendung ihres Meta-Moduls;
einen Neue-Klassen-Merkmal-Mittelungs-Schritt zum, für jede neue Klasse in einer Vielzahl von neuen Klassen, Mitteln der optimierten Merkmalsvektoren der Bildproben in der jeweiligen neuen Klasse und Berechnen eines Klassifikations-Gewichtsvektors der neuen Klasse basierend auf dem gemittelten Merkmalsvektor; und
Verwenden, durch die Graph-Neuronales-Netzwerk-Einheit, des Klassifikations-Gewichtsvektors der Basisklasse und des Klassifikations-Gewichtsvektors der neuen Klasse als Eingabe, um ein Meta-Lernen der Abhängigkeitsbeziehung zwischen der Basisklasse und der neuen Klasse durchzuführen, wodurch ein Rekonstruktions-Klassifikations-Gewichtsvektor ausgegeben wird; und
der Basisklassen- und Neue-Klassen-Erkennungs-Schritt aufweisend:
einen Unbekannte-Klassen-Klassifikations-Schritt zum Verwenden, als Eingabe, der extrahierten Merkmalsvektoren der Bildproben in der unbekannten Klasse und zum Klassifizieren der Bildproben in der unbekannten Klasse unter Verwendung des Rekonstruktions-Klassifikations-Gewichtsvektors.

3. Ein maschinelles Lernprogramm, eingerichtet zum Durchführen eines kontinuierlichen Lernens einer Klassifikation einer neuen Klasse mit weniger Bildproben als eine Basisklasse, wobei das maschinelle Lernprogramm Anweisungen aufweist, die, wenn durch einen Computer ausgeführt, den Computer veranlassen, das Verfahren nach Anspruch 2 durchzuführen.

## Revendications

1. Dispositif d'apprentissage automatique (210, 220) configuré pour effectuer un apprentissage continu d'une classification d'une nouvelle classe avec moins d'échantillons d'image qu'une classe de base, le dispositif d'apprentissage automatique comprenant :
une unité d'extraction de caractéristiques de classe de base (54) configurée pour extraire des vecteurs de caractéristiques des échantillons d'image au sein de la classe de base en utilisant un modèle pré-entraîné ;
une unité de classification de classe de base (56) configurée pour utiliser en tant qu'entrée les vecteurs de caractéristiques extraits des échantillons d'image de la classe de base et pour classer les échantillons d'image au sein de la classe de base en utilisant un vecteur de pondération de classification de la classe de base ;
un module de méta-apprentissage (60) configuré pour entraîner une unité de réseau neuronal graphique (70, 74) et une unité d'optimisation des caractéristiques (64) de façon épisodique sur la base du modèle pré-entraîné, générant ainsi des méta-modules respectifs ; dans lequel l'apprentissage de façon épisodique comprend le méta-apprentissage par, au cours de chaque épisode d'une pluralité d'épisodes, la classification d'échantillons d'image de requête à partir à la fois de la classe de base et de la nouvelle classe sur la base d'échantillons d'image de support provenant de la nouvelle classe de sorte à minimiser une perte de classification des échantillons d'image de requête au sein de la classe de base et la nouvelle classe, d'où il résulte l'apprentissage d'une relation de dépendance entre la classe de base et de la nouvelle classe ; et dans lequel le module de méta-apprentissage est configuré en outre pour : au cours d'épisodes à numéros impairs, maintenir fixe des paramètres de l'unité d'optimisation des caractéristiques et apprendre des paramètres de l'unité de réseau neuronal graphique ; et, au cours d'épisodes à numéros pairs, maintenir fixe les paramètres de l'unité de réseau neuronal graphique et apprendre les paramètres de l'unité d'optimisation des caractéristiques ; et
un module de reconnaissance de classe de base et de nouvelle classe (80) configuré pour classer des échantillons d'image au sein de classes inconnues en utilisant les méta-modules ;
dans lequel le module de méta-apprentissage (60) comprend :
l'unité d'optimisation des caractéristiques (64) qui comporte son méta-module, et est configuré pour effectuer le méta-apprentissage de son méta-module afin d'optimiser des vecteurs de caractéristiques des échantillons d'image au sein de la nouvelle classe, et est configuré en outre pour extraire des vecteurs de caractéristiques des échantillons d'image au sein d'une des classes inconnues en utilisant son méta-module ;
une unité de moyenne des caractéristiques d'une nouvelle classe (66) configurée pour, pour chaque nouvelle classe d'une pluralité de nouvelles classes, calculer la moyenne des vecteurs de caractéristiques optimisés des échantillons d'image au sein de la nouvelle classe respective et pour calculer un vecteur de pondération de classification de la nouvelle classe sur la base du vecteur de caractéristiques moyen ;
l'unité de réseau neuronal graphique (70, 74) configurée pour utiliser en tant qu'entrée le vecteur de pondération de classification de la classe de base et le vecteur de pondération de classification de la nouvelle classe, afin d'effectuer un méta-apprentissage de la relation de dépendance entre la classe de base et la nouvelle classe, fournissant ainsi en sortie un vecteur de pondération de classification reconstruit ; et
le module de reconnaissance de classe de base et de nouvelle classe (80) comprenant :
une unité de classification de classe inconnue (86) configurée pour utiliser, en tant qu'entrée, les vecteurs de caractéristiques extraits des échantillons d'image au sein de la classe inconnue et pour classer les échantillons d'image au sein de la classe inconnue en utilisant le vecteur de pondération de classification reconstruit.

2. Procédé d'apprentissage automatique mis en œuvre par ordinateur qui effectue un apprentissage continu d'une classification d'une nouvelle classe avec moins d'échantillons d'image qu'une classe de base, le procédé d'apprentissage automatique mis en œuvre par ordinateur comprenant :
une étape d'extraction de caractéristiques de classe de base d'extraction de vecteurs de caractéristiques des échantillons d'image au sein de la classe de base en utilisant un modèle pré-entraîné ;
une étape de classification de classe de base d'utilisation en tant qu'entrée des vecteurs de caractéristiques extraits des échantillons d'image au sein de la classe de base et de classification des échantillons d'image au sein de la classe de base en utilisant un vecteur de pondération de classification de la classe de base ;
une étape de méta-apprentissage d'entraînement d'une unité de réseau neuronal graphique et d'une unité d'optimisation des caractéristiques de façon épisodique sur la base du modèle pré-entraîné, générant ainsi des méta-modules respectifs ; dans lequel l'apprentissage de façon épisodique comprend le méta-apprentissage par, au cours de chaque épisode d'une pluralité d'épisodes, la classification d'échantillons d'image de requête à partir à la fois de la classe de base et de la nouvelle classe sur la base d'échantillons d'image de support provenant de la nouvelle classe de sorte à minimiser une perte de classification des échantillons d'image de requête au sein de la classe de base et de la nouvelle classe, d'où il résulte l'apprentissage d'une relation de dépendance entre la classe de base et la nouvelle classe ; et dans lequel l'étape de méta-apprentissage comprend en outre : au cours d'épisodes à numéros impairs, le maintien fixe de paramètres de l'unité d'optimisation des caractéristiques et l'apprentissage de paramètres de l'unité de réseau neuronal graphique ; et, au cours d'épisodes à numéros pairs, le maintien fixe des paramètres de l'unité de réseau neuronal graphique et l'apprentissage des paramètres de l'unité d'optimisation des caractéristiques ; et
une étape de reconnaissance de classe de base et de nouvelle classe de classification d'échantillons d'image au sein de classes inconnues en utilisant les méta-modules ;
dans lequel l'étape de méta-apprentissage comprend :
la mise en œuvre, par l'unité d'optimisation des caractéristiques qui comporte son méta-module, du méta-apprentissage de son méta-module pour optimiser des vecteurs de caractéristiques des échantillons d'image de la nouvelle classe, et de l'extraction, par l'unité d'optimisation des caractéristiques, de vecteurs de caractéristiques des échantillons d'image au sein d'une des classes inconnues en utilisant son méta-module ;
une étape de moyenne des caractéristiques de la nouvelle classe de, pour chaque nouvelle classe au sein d'une pluralité de nouvelles classes, calcul d'une moyenne des vecteurs de caractéristiques optimisés des échantillons d'image au sein de la nouvelle classe respective et de calcul d'un vecteur de pondération de classification de la nouvelle classe sur la base du vecteur de caractéristiques moyen ; et
l'utilisation, par l'unité de réseau neuronal graphique, en tant qu'entrée du vecteur de pondération de classification de la classe de base et du vecteur de pondération de classification de la nouvelle classe, afin d'effectuer un méta-apprentissage de la relation de dépendance entre la classe de base et la nouvelle classe, fournissant ainsi en sortie un vecteur de pondération de classification reconstruit ; et
l'étape de reconnaissance de classe de base et de nouvelle classe comprenant :
une étape de classification de classe inconnue d'utilisation, en tant qu'entrée, des vecteurs de caractéristiques extraits des échantillons d'image au sein de la classe inconnue et de classification des échantillons d'image au sein de la classe inconnue en utilisant le vecteur de pondération de classification reconstruit.

3. Programme d'apprentissage automatique configuré pour effectuer un apprentissage continu d'une classification d'une nouvelle classe avec moins d'échantillons d'image qu'une classe de base, le programme d'apprentissage automatique comprenant des instructions qui, lorsqu'elles sont exécutées par un ordinateur, amènent l'ordinateur à exécuter le procédé selon la revendication 2.
